# EUROPEAN PATENT SPECIFICATION

(11) **EP 3 407 216 B1**
(45) Date of publication and mention of the grant of the patent: **27.10.2021**
(21) Application number: 18173858.4
(22) Date of filing: 23.05.2018
(51) Int. Cl.: G06F 16/958

(54) **METHOD AND DEVICE FOR DISPLAYING INFORMATION RESOURCE, AND COMPUTER READABLE STORAGE MEDIUM**
VERFAHREN UND VORRICHTUNG ZUR ANZEIGE VON INFORMATIONSRESSOURCEN UND COMPUTERLESBARES SPEICHERMEDIUM
PROCÉDÉ ET DISPOSITIF D'AFFICHAGE DE RESSOURCES D'INFORMATIONS ET SUPPORT D'INFORMATIONS LISIBLE PAR ORDINATEUR

(30) Priority: 25.05.2017 CN 201710380408
(43) Date of publication of application: 28.11.2018
(73) Proprietor: Beijing Xiaomi Mobile Software Co., Ltd., Beijing 100085 (CN)
(72) Inventor: LIU, Bo, Haidian District, Beijing 100085 (CN); WANG, Yunke, Haidian District, Beijing 100085 (CN); LI, Shaoming, Haidian District, Beijing 100085 (CN)
(74) Representative: Jeffrey, Philip Michael

(56) References cited:
- WO-A1-2017/003893
- US-A1- 2014 359 488
- US-B1- 6 544 295
- SUSAN DUMAIS ET AL: "Stuff I've Seen", SIGIR FORUM, ACM, NEW YORK, NY, US, vol. 49, no. 2, 29 January 2016 (2016-01-29), pages 28-35, XP058078052, ISSN: 0163-5840, DOI: 10.1145/2888422.2888425
- Victor Agreda ET AL: "The ins and outs of Instapaper", , 26 October 2016 (2016-10-26), XP055495374, Retrieved from the Internet: URL:https://web.archive.org/web/2016102615 0536/http://thenextweb.com:80/lifehacks/20 12/08/08/deep-dive-into-instapaper-how-to- use-it-and-tips-for-power-users/ [retrieved on 2018-07-25]

## Description

### TECHNICAL FIELD

The present invention relates to the field of internet technology, particularly to a method and a device for displaying an information resource, and a computer readable storage medium.

### BACKGROUND

Collection function in an application may provide personalized management of information resources for every user, and enable the user to quickly and conveniently find an information resource he or she concerns again, without the need to screen it from the massive information resources each time by the user. Therefore, it may significantly improve user experience. In this regard, nowadays applications in smart terminals are generally all set up with such function. Smart terminal now may collect a variety of information resources within its application. For example, for an e-commerce application, a user may collect his or her favorite shops or goods, for convenience browse in the future without the need to search for each time.

Each application provides a collection entrance to implement the collection. When information resources are collected through respective applications, generally, collected information resources are managed respectively by collection folders set up in respective applications. In this way, to check a collected information resource, a user needs to at least perform operation of multiple steps: clicking an application icon→clicking a virtual button for entering a personal home page→clicking a collection folder on the personal home page. Then, the terminal may display through the application the collection folder containing the collected information resource. Contents collected by the user may be distributed in multiple applications. In such case, display of the information resources is complex, time-consuming and laborious. Accordingly, how to display the collected information resources appears to be particularly important.

US 2014/0359488 discloses centralized management of link data for multiple applications, computers and resources, through operating systems and networked storage services. US 6,544,295 discloses methods for managing preferred internet sites in a computer system having a browser. WO 2017/003893 discloses automatic grouping of browser bookmarks. Susan Dumais et al: "Stuff I've seen", Sigir Forum, ACM, New York, NY, US, vol. 49, no. 2, 29 January 2016, (2016-01-29), pages 28-35, XP058078052, discloses a system for personal information retrieval and re-use. Victor Agreda et al: "The ins and outs of Instapaper", 26 October 2016

### SUMMARY

This Summary is provided to introduce a selection of aspects and embodiments of the present disclosure in a simplified form that are further described below in the Detailed Description. This Summary is not intended to identify key features or essential features of the claimed subject matter, nor is it intended to be used to limit the scope of the claimed subject matter.

According to a first aspect of the present invention, there is provided a method for displaying an information resource as claimed in claim 1.

In an embodiment, displaying the key information of the preset number of items of collected information resources on the designated interface includes:
determining a designated region on the designated interface for displaying the common collection folder; and
according to an order from recent to early of collection times, displaying the key information of the preset number of items of collected information resources in the designated region in a form of information items;
wherein the collection times of the preset number of items of collected information resources are later than other collected information resources among all the collected information resources, the information resource collected most recently among the preset number of items of collected information resources is displayed at the top position of the designated region, and the information resources collected earliest is displayed at the bottom position of the designated region.

In another embodiment, acquiring key information of a preset number of items of collected information resources stored in a common collection folder includes;
based on a size of the designated region occupied for displaying the common collection folder on the designated interface, determining a number of items of information resources that can be displayed in the designated region; and
according to an order from recent to early of the collection times, selecting from the common collection folder the preset number of items of most recently collected information resources, the preset number corresponding to the number of items of information resources.

In another embodiment, the method further includes:
displaying a details display button in the designated region for displaying the common collection folder; and
when detecting a confirmation operation on the details display button, displaying the key information of the items of information resources stored in the common collection folder in a form of information items according to an order from recent to early of the collection times;
wherein the key information of the information resource collected most recently among the items of collected information resources is displayed at the top position of a page, and the key information of the information resources collected earliest is displayed at the bottom position of the page.

In another embodiment, the method further includes:
when detecting a sliding operation, displaying key information of other information resources than the items of collected information resources in the common collection folder in a rolling manner according to an order from recent to early of collection times.

In another embodiment, the method further includes:
displaying a details display button in the designated region for displaying the common collection folder; and
when detecting a confirmation operation on the details display button, displaying the key information of the items of collected information resources in the common collection folder according to types of the information resources;
wherein among the items of information resources, the information resources belonging to the same type are displayed at locations adjacent to each other; and among the information resources belonging to the same type, the key information of information resource collected earlier is displayed at earlier location.

In another embodiment, the method further includes:
for each of the collected information resources in the common collection folder, acquiring address link information corresponding to the collected information resource;
extracting a domain name information in the address link information corresponding to the collected information resource; and
determining at least two collected information resources having consistent domain name information as belonging to the same type of information resources.

In another embodiment, the method further includes:
displaying one delete button respectively on each of the information items where the key information of the items of collected information resources is located; and
when detecting a confirmation operation on a delete button corresponding to any of the collected information resources, deleting the collected information resource as selected from the common collection folder.

In another embodiment, the method further includes:
upon detecting a selection operation on any one item of key information of the preset number of items of key information, when the selected designated information resource is webpage content, acquiring the designated information resource from a server according to the address link information corresponding to the designated information resource; or,
upon detecting a selection operation on any one item of key information of the preset number of items of key information, when the selected designated information resource is non-webpage content, acquiring the designated information resource from the local machine according to a key content word contained in the key information.

In another embodiment, the method further includes:
displaying the designated information resource through a network view component of the system.

In another embodiment, the method further includes:
upon detecting a selection operation on any one item of key information of the preset number of items of key information, when the selected designated information resource is webpage content, determining which application the designated information resource is derived from according to the address link information corresponding to the designated information resource; and
starting the determined application, and displaying the designated information resource through the determined application.

In another embodiment, determining which application the designated information resource is derived from according to the address link information corresponding to the designated information resource includes:
determining which application the designated information resource is derived from according to the domain name in the address link information corresponding to the designated information resource;
wherein a list of corresponding relationship between the domain names and the applications is previously stored in the local machine.

In another embodiment, the method further includes:
receiving from the server an updating instruction with respect to the list, and updating the list according to the updating instruction.

In another embodiment, the method further includes:
before displaying the designated information resource, when the designated information resource is graphic and text content, processing the designated information resource by adjusting the layout, to obtain a processed designated information resource.

In another embodiment, the method further includes:
when the processed designated information resource is displayed through the network view component, displaying a presentation experience setting option on the page for displaying the processed designated information resource;
wherein the presentation experience setting option includes at least a background color adjustment option and a font size adjustment option, the background color adjustment option includes at least two background color pull-down sub-options, and the font size adjustment option includes at least two font size pull-down sub-options.

In another embodiment, the method further includes:
for each collected information resource of all the collected information resources, periodically detecting whether the information resource has dynamically update; and
when the information resource has dynamically update, displaying the key information of the collected information resource and an update notification message of the collected information resource at a top position of the designated region where the common collection folder is located.

According to a second aspect of the embodiments of the present invention, there is provided a device for displaying an information resource as claimed in claim 6.

In an embodiment, the displaying module is configured to:
determine a designated region on the designated interface for displaying the common collection folder; and
according to an order from recent to early of collection times, display the key information of the preset number of items of collected information resources in the designated region in a form of information items;
wherein the collection times of the preset number of items of collected information resources are later than other collected information resources among all the collected information resources, the information resource collected most recently among the preset number of items of collected information resources is displayed at the top position of the designated region, and the information resources collected earliest is displayed at the bottom position of the designated region.

In another embodiment, the acquiring module is configured to:
based on a size of the designated region occupied for displaying the common collection folder on the designated interface, determine a number of items of information resources that can be displayed in the designated region; and
according to an order from recent to early of the collection times, select from the common collection folder the preset number of items of most recently collected information resources, the preset number corresponding to the number of items of information resources.

In another embodiment, the displaying module is further configured to display a details display button in the designated region for displaying the common collection folder; and
the displaying module is further configured to, when detecting a confirmation operation on the details display button, display the key information of the items of information resources stored in the common collection folder in a form of information items according to an order from recent to early of the collection times;
wherein the key information of the information resource collected most recently among the items of collected information resources is displayed at the top position of a page, and the key information of the information resources collected earliest is displayed at the bottom position of the page.

In another embodiment, the displaying module is further configured to, when detecting a sliding operation, display key information of other information resources than the items of collected information resources in the common collection folder in a rolling manner according to an order from recent to early of collection times.

In another embodiment, the displaying module is further configured to:
display a details display button in the designated region for displaying the common collection folder; and
when detecting a confirmation operation on the details display button, display the key information of the items of collected information resources in the common collection folder according to types of the information resources;
wherein among the items of information resources, the information resources belonging to the same type are displayed at locations adjacent to each other; and among the information resources belonging to the same type, the key information of information resource collected earlier is displayed at earlier location.

In another embodiment, the device further includes:
the acquiring module further configured to, for each of the collected information resources in the common collection folder, acquire address link information corresponding to the collected information resource;
an extracting module configured to extract a domain name information in the address link information corresponding to the collected information resource; and
a determining module configured to determine at least two collected information resources having consistent domain name information as belonging to the same type of information resources.

In another embodiment, the device further includes:
the displaying module further configured to display one delete button respectively on each of the information items where the key information of the items of collected information resources is located; and
a deleting module configured to, when detecting a confirmation operation on a delete button corresponding to any of the collected information resources, delete the collected information resource as selected from the common collection folder.

In another embodiment, the acquiring module is further configured to:
upon detecting a selection operation on any one item of key information of the preset number of items of key information, when the selected designated information resource is webpage content, acquire the designated information resource from a server according to the address link information corresponding to the designated information resource; or,
upon detecting a selection operation on any one item of key information of the preset number of items of key information, when the selected designated information resource is non-webpage content, acquire the designated information resource from the local machine according to a key content word contained in the key information.

In another embodiment, the displaying module is further configured to display the designated information resource through a network view component of the system.

In another embodiment, the device further includes:
a determining module configured to, upon detecting a selection operation on any one item of key information of the preset number of items of key information, when the selected designated information resource is webpage content, determine which application the designated information resource is derived from according to the address link information corresponding to the designated information resource; and
the displaying module further configured to start the determined application, and display the designated information resource through the determined application.

In another embodiment, the determining module is further configured to determine which application the designated information resource is derived from according to the domain name in the address link information corresponding to the designated information resource;
wherein a list of corresponding relationship between the domain names and the applications is previously stored in the local machine.

In another embodiment, the device further includes:
a receiving module configured to receive from the server an updating instruction with respect to the list, and
an updating module configured to update the list according to the updating instruction.

In another embodiment, the device further includes:
a processing module configured to, before displaying the designated information resource, when the designated information resource is graphic and text content, process the designated information resource by adjusting the layout, to obtain a processed designated information resource.

In another embodiment, the displaying module is further configured to, when the processed designated information resource is displayed through the network view component, display a presentation experience setting option on the page for displaying the processed designated information resource;
wherein the presentation experience setting option includes at least a background color adjustment option and a font size adjustment option, the background color adjustment option includes at least two background color pull-down sub-options, and the font size adjustment option includes at least two font size pull-down sub-options.

In another embodiment, the device further includes:
a detecting module configured to, for each collected information resource of all the collected information resources, periodically detect whether the information resource has dynamically update; and
the displaying module further configured to, when the information resource has dynamically update, display the key information of the collected information resource and an update notification message of the collected information resource at a top position of the designated region where the common collection folder is located.

The technical solutions provided by the embodiments of the present invention may have the following advantageous effects.

Since displaying the information resources gathered and stored in the common collection folder on the designated interface is realized, a certain item of information resource may be viewed conveniently and quickly, without performing complex operation of multiple steps. Thus, it may provide a quick and highly efficient entrance for subsequent viewing process, which is more intelligent.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a schematic diagram of an interface of a terminal according to an exemplary embodiment.
Fig. 1B is a schematic diagram of an interface of a terminal according to an exemplary embodiment.
Fig. 1C is a schematic diagram of an interface of a terminal according to an exemplary embodiment.
Fig. 2 is a flow chart illustrating a method for collecting an information resource relying on capacity of an underlying system according to an exemplary embodiment.
Fig. 3 is a schematic diagram of an interface of a terminal according to an exemplary embodiment.
Fig. 4 is a schematic diagram of an interface of a terminal according to an exemplary embodiment.
Fig. 5 is a schematic diagram of an interface of a terminal according to an exemplary embodiment.
Fig. 6 is a schematic diagram of an interface of a terminal according to an exemplary embodiment.
Fig. 7 is a flow chart illustrating a method for collecting an information resource relying on an interface.
Fig. 8 is a flow chart illustrating a method for displaying an information resource according to an exemplary embodiment.
Fig. 9 is a schematic diagram of an interface of a terminal according to an exemplary embodiment.
Fig. 10 is a flow chart illustrating a method for searching for an information resource according to an exemplary embodiment.
Fig. 11 is a block diagram illustrating a device for displaying an information resource according to an exemplary embodiment.
Fig. 12 is a block diagram illustrating a device for displaying an information resource according to an exemplary embodiment.
Fig. 13 is a block diagram illustrating a device for displaying an information resource according to an exemplary embodiment.
Fig. 14 is a block diagram illustrating a device for displaying an information resource according to an exemplary embodiment.
Fig. 15 is a block diagram illustrating a device for displaying an information resource according to an exemplary embodiment.
Fig. 16 is a block diagram illustrating a device for displaying an information resource according to an exemplary embodiment.
Fig. 17 is a block diagram illustrating a device for displaying an information resource according to an exemplary embodiment.
Fig. 18 is a block diagram illustrating a device for displaying an information resource according to an exemplary embodiment.

The specific aspects and embodiments of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects and embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Before the detailed description of the embodiments of the present invention, some terms referred to in the present embodiments will be briefly described.

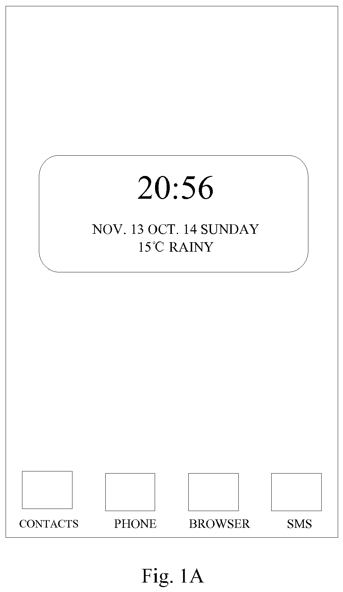

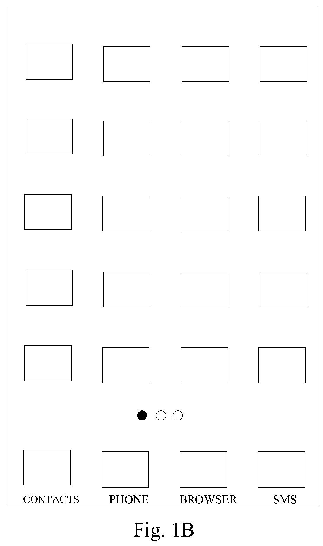

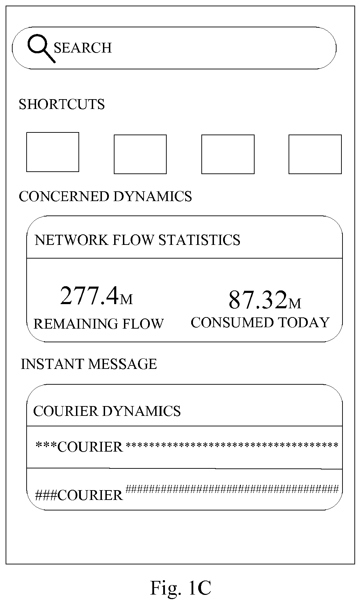

A designated interface may be a functional interface on the terminal screen other than the main interface as shown in Fig. 1A and an application interface for displaying an installed application as shown in Fig. 1B, also known as a negative one screen. The negative one screen generally refers to a functional interface at the leftmost side of all the functional interfaces on the terminal screen. When a rightward sliding operation is performed on the main interface, the negative one interface may be displayed on the terminal screen. As shown in Fig. 1C, at present, contents displayed on the negative one interface may be generally divided into three categories: one is a convenient entrance, second is an instant advice, and third is concerned dynamic information.

The convenient entrance gathers direct entrances to all kinds of applications or functions. Through an application recommendation algorithm or a manner of direct access to functions within an application, cumbersome steps for users to find applications or functions may be eliminated, and it may help the user to use the terminal more effectively and more effortless. The instant advice is generally relevant to the current situation of the user. When some conditions (time, place, in-app behavior, etc.) are triggered, sufficiently valuable and time effective contents may be provided to the user, including, for example, travel advice, courier tracking, music and radio, train tickets, air tickets, group vouchers, movie tickets, weather warning, daily greetings, schedule reminders, etc. The concerned dynamic information may provide an experience similar to the desktop gadget, such as network flow statistics or sports information.

In an embodiment of the present invention, the concerned dynamic information described above has been expanded by adding a desktop gadget having a collection function. Such desktop gadget having a collection function may be referred to as a common collection folder, which may gather information resources distributed in collection folders of respective applications, in order to, through the common collection folder, uniformly manage the information resources collected in multiple applications.

Hereinafter, the collection, display and search of the information resources will be described in detail mainly from four aspects.

In a first aspect, an embodiment of the present invention proposes a method for collecting an information resource relying on capacity of an underlying system.

Such collection method may effectively avoid the following situations which present poor user experience.

First, since the collected information resources are distributed in collection folders of respective applications, when search for an information resource, the user may forget in which application's collection folder the information resource is collected. Then, there arises a problem that the user will have to traverse all the applications to search.

Second, even if the user knows in which application's collection folder the information resource is collected, the user still has to perform operation of multiple steps to find the information resource through the application. For example, the user has to perform successively the following operations: clicking an application icon→clicking a virtual button for entering a personal home page→clicking a collection folder on the personal home page.

The detailed implementation of the method for collecting an information resource relying on capacity of an underlying system provided by the present embodiment may refer to the following embodiment.

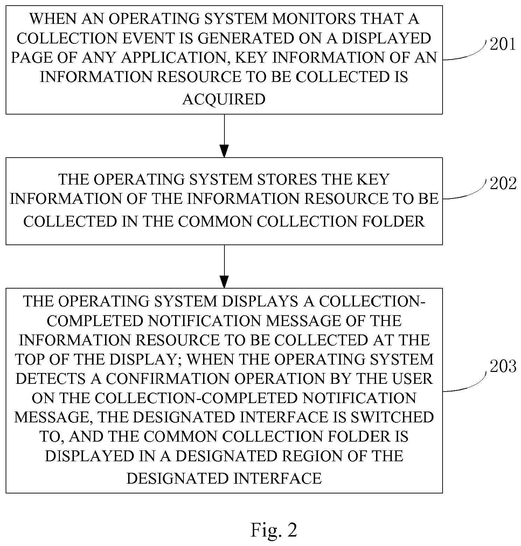

Fig. 2 is a flow chart illustrating a method for collecting an information resource relying on capacity of an underlying system according to an exemplary embodiment. The method includes the following steps.

In step 201, when an operating system monitors that a collection event is generated on a displayed page of any application, key information of an information resource to be collected is acquired.

In an embodiment of the present invention, the step is performed by the operating system on the terminal. That is, in the embodiment of the present invention, the operating system captures collection events occurred on displayed pages of respective applications, to gather information resources collected in the applications to a common collection folder. In other words, the operating system monitors collection events occurred on the pages. The monitoring of the operating system is directed to all of the applications on the terminal, including third party applications from third parties, and applications that come with the operating system, which is not particularly limited in the embodiment of the present invention.

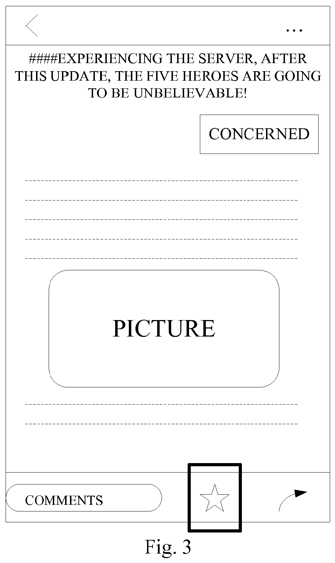

A displayed page of any application may be shown in Fig. 3. For example, when a collection event is a confirmation operation of pressing a collection button displayed in a displayed page, a collection button (inside a black block) may be displayed at a right lower corner in Fig. 3. When the user selects the collection button, the operating system may capture the collection event, and then take the contents contained on the display page as an information resource to be collected.

It should be noted that the types of information resources may cover all aspects, such as articles, videos, merchandise information, drama information, etc.. Fig. 3 only takes a collection of an article as an example.

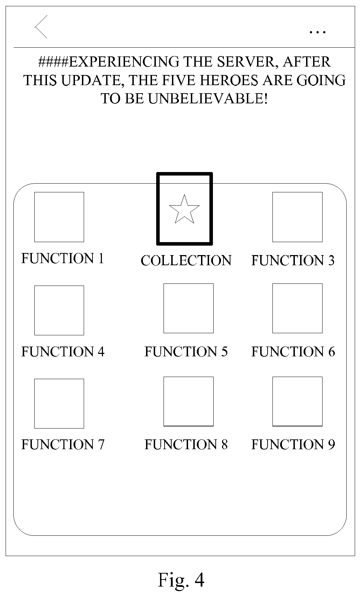

In another embodiment, in addition to the display mode shown in Fig. 3, the collection button may also have other display modes as shown in Fig. 4. Regardless of the display mode, the operating system may accurately capture collection events by previously collecting and analyzing various types of displayed pages and monitoring the pages.

In step 202, the operating system stores the key information of the information resource to be collected in the common collection folder.

In an embodiment of the present invention, the common collection folder gathers and manages key information of information resources of various applications. That is, when collecting an information resource, the operating system stores the key information of the information resource to be collected in the common collection folder.

When the operating system acquires the key information of the information resource to be collected, depending on the type of the information resource to be collected, the contents contained in the key information may be different. That is, for an information resource to be collected, the operating system firstly determines the type of the information resource to be collected. Then, according to the type of the information resource to be collected, the operating system acquires the key information of the information resource to be collected.

In an embodiment of the present invention, the information resources to be collected may be generally classified into webpage content and non-webpage content. Webpage content may include a native web page generated by the application, such as a current headline page from a news application. Webpage content may also include, displayed by an application, a regenerated webpage from other applications, such as, displayed by a social application, a food webpage from a food application.

Non-webpage content is mainly used for the following scenarios. When a user chats with a friend through a social application, the user may pay interest or concern to some contents the friend sends on the information interaction page. At this time, the user may trigger a collection event. In an embodiment of the present invention, the operating system also captures such collection event. For example, the user collects a piece of address link information sent by the friend.

That is, generally, the operating system, depending on the type of information resource to be collected, acquires the key information of the information resources to be collected, by the following two manners:

The first manner: if the information resource to be collected is webpage content, at least the title information and a picture of the information resource to be collected are taken as the key information of the information resources to be collected.

For the first manner, referring to Fig. 3, "###experiencing the server, after this update, the five heroes are going to be unbelievable" will be the title information, and the picture on the displayed page is the picture of the information resource to be collected.

Later, if the user wants the information resource to be collected is displayed on the designated interface, generally, the information resource to be collected will be represented by the title information and the picture. However, if the current displayed page does not contain a picture, the picture may not be acquired. Alternatively, if the current displayed page contains multiple pictures, one picture may be randomly selected from the multiple pictures.

In another embodiment, in addition to the above contents, the key information may also include address link information corresponding to the information resource to be collected, i.e. the URL (Uniform Resource Locator) of the current displayed page. According to the URL, detailed contents of the information resource to be collected may be drawn from the server. In addition, the key information may include collection time, source information, and the like, which is not particularly limited in the embodiment of the present invention. The source information is used to represent which application the collection event comes from, such as the name of the application.

The second manner: if the information resource to be collected is non-webpage content, at least the key content word is taken as the key information of the information resources to be collected.

For the second manner, the above key content word may be some words having key indicating information, which is extracted from the full text of the information resource to be collected. Specifically, it may be realized by word cutting and semantic analysis to the full text of the information resource to be collected. Alternatively, the above key content word may also be some words located at the head of the content of the information resource to be collected, such as a noun phrase contained in first few sentences in the full content. The acquisition manner of the key content word is not particularly limited in the embodiment of the present invention.

In step 203, the operating system displays a collection-completed notification message of the information resource to be collected at the top of the display; when the operating system detects a confirmation operation by the user on the collection-completed notification message, the designated interface is switched to, and the common collection folder is displayed in a designated region of the designated interface.

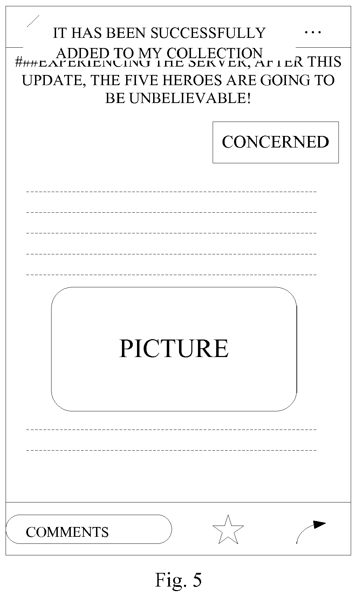

In this step, after the operating system completes the collection of the information resource to be collected, the operating system will send a notification to prompt the user. Referring to Fig. 5, the collection-completed notification message may be a fixed text message such as "it has been successfully added to my collection". In order to ensure the user may intuitively check the collection result of the information resource to be collected, the collection-completed notification message is generally displayed on the screen of the terminal at the top of the display.

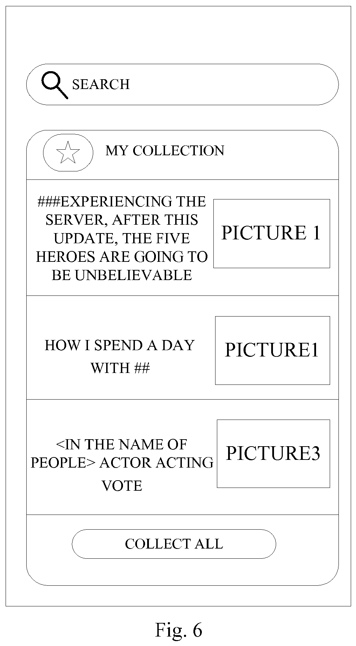

In this step, in addition to the role of prompting the user, the collection-completed notification message may also function as an operating entrance for switching to the designated interface. That is, when the operating system detects a confirmation operation by the user on the collection-completed notification message, for example, the user clicking the collection-completed notification message, as shown in Fig. 6, the operating system controls the terminal to switch to the designated interface, and displays the common collection folder in a designated region of the designated interface.

At this time, as shown in Fig. 6, the key information of the information resource that has just been collected is located at the top position of the designated region. In other words, after the user triggers the collection-completed notification message, the terminal will switch to the designated interface and display the key information of the information resource that has just been collected on the designated interface for the user to view.

In conjunction with the foregoing explanation of the designated interface and Fig. 6, in the present embodiment, a designated region dedicated to displaying the common collection folder is assigned on the designated interface. The common collection folder is displayed in the assigned designated region in a form similar to a card.

It is to be noted that the key information of the multiple information resources gathered in the common collection folder may be stored in local machine. In addition to that, the key information of the multiple information resources gathered in the common collection folder may also be uploaded to a first server for backup storage. The operating system may upload the key information of all the information resources gathered in the common collection folder to the first server through a designated account registered by the user. In addition to such collection manner, in an embodiment of the present invention, it also supports the user manually adding an information resource to be collected in the common collection folder. For example, the user may also realize collection of information resources by a conventional sharing and copying address links.

In the method for collecting an information resource provided by the embodiment of the present invention, since the operating system monitors the displayed pages of various applications for collection events, the operating system may gather the information resources otherwise distributed in various applications for collection, and uniformly store them in the common collection folder. It may facilitate the user to uniformly manage the collected information resources with the common collection folder, which is more intelligent.

In view of the above, the above describes the method for collecting an information resource relying on capacity of an underlying system. In addition to that, an embodiment of the present invention also supports collecting an information resource relying on an interface, to replace the above method for collecting an information resource relying on capacity of an underlying system, as follows.

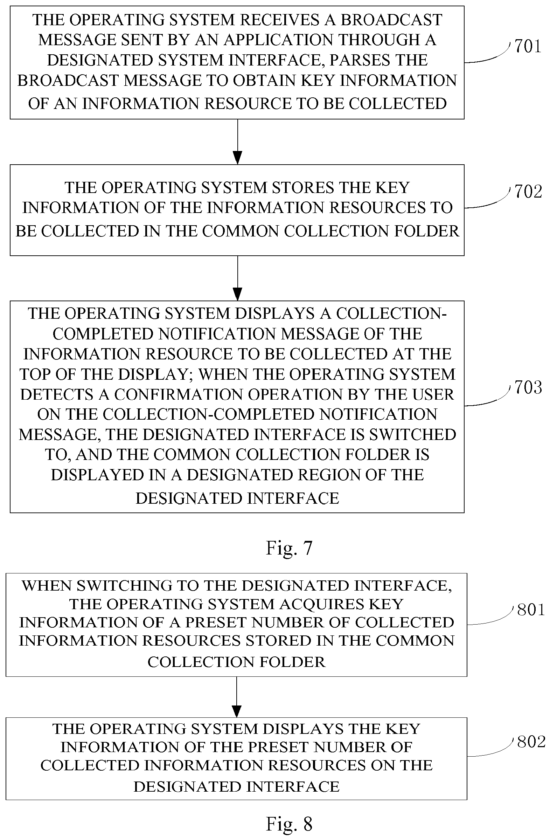

Fig. 7 is a flow chart illustrating a method for collecting an information resource relying on an interface. The method includes the following steps.

In step 701, the operating system receives a broadcast message sent by an application through a designated system interface, parses the broadcast message to obtain key information of an information resource to be collected.

The first thing to note is that the application mentioned in this step may be any application on the terminal, either a third party application from a third party or an application that comes with the system.

The designated system interface is an open interface of a respective application on the terminal, for the respective application to report a collection event of the application to the operating system. That is, in this method for collecting an information resource, the operating system is not required to actively monitor the collection event on the displayed page of the application. Instead, when a collection event occurs on the displayed page of the application, the application actively sends a broadcast message to the operating system through the designated system interface. Then, the operating system completes the collection of the information resource based on the received broadcast message.

The description of the collection event may refer to the above step 201, which will not be repeated herein.

For an application, when a collection event occurs on the displayed page provided by the application, the application will immediately respond to the collection event and generate a broadcast message for the collection event through the previously designated interface specification. If the information resource to be collected is webpage content, the broadcast message may contain, for example, title information, a picture, address link information and the like of the information resource to be collected. If the information resource to be collected is non-webpage content, the broadcast message may contain key content word of the information resource to be collected, and so on.

In addition, in order to facilitate data transmission between an application and the operating system, the broadcast messages may be subjected to some processes such as compression processing or the like. After the operating system receives the above broadcast message through the designated system interface, the operating system may parse the broadcast message according to the above interface specification, so as to analyze the key information of the information resource to be collected from the broadcast message.

In step 702, the operating system stores the key information of the information resources to be collected in the common collection folder.

This step is the same as the above-mentioned step 202, and will not be repeated herein.

In step 703, the operating system displays a collection-completed notification message of the information resource to be collected at the top of the display; when the operating system detects a confirmation operation by the user on the collection-completed notification message, the designated interface is switched to, and the common collection folder is displayed in a designated region of the designated interface.

This step is the same as the above-mentioned step 203, and will not be repeated herein.

In the above method for collecting an information resource, since a system interface is provided for the respective application, when a collection event occurs on the page, the corresponding application may actively send a broadcast message to the operating system through the system interface. Then, the operating system may gather the information resources otherwise distributed in various applications for collection based on the broadcast message, and uniformly store them in the common collection folder. It may facilitate the user to uniformly manage the collected information resources with the common collection folder, which is more intelligent.

In sum, two different methods for collecting an information resource have been described. The method for collecting an information resource relying on capability of the underlying system is applicable to an application which has not been provided with a designated system interface as described above. The method for collecting an information resource relying on an interface is applicable to an application which has been provided with a designated system interface as described above. No matter which of the two methods is employed to implement gathering the information resources of various applications in the common collection folder, the key information of the information resources gathered and collected in the common collection folder may be displayed in the following manners.

An embodiment of the present invention proposes a method for displaying an information resource.

Fig. 8 is a flow chart illustrating a method for displaying an information resource according to an exemplary embodiment. The method includes the following steps.

In step 801, when switching to the designated interface, the operating system acquires key information of a preset number of collected information resources stored in the common collection folder.

In an embodiment of the present invention, as described above, key information of collected information resources collected by the user from various applications is gathered and stored in the common collection folder. Therefore, the number of information resources involved in the common collection folder may be large. While the designated region occupied on the designated interface for displaying the common collection folder has a fixed size. Therefore, some information resources have to be determined from the huge number of collected information resources to be displayed in the designated region.

The selection of the information resources may be implemented according to the collection times. That is, acquiring the key information of the preset number of collected information resources stored in the common collection folder may be implemented through the following manner: based on the size of the designated region, the number of the information resources that may be displayed in the designated region is determined. According to an order from recent to early of the collection times, the preset number of collected information resources corresponding to the number of the information resources, which are most recently collected are selected from the common collection folder.

In step 802, the operating system displays the key information of the preset number of collected information resources on the designated interface.

Displaying the key information of the preset number of collected information resources which have been selected may also be implemented according to the collection times. That is, according to an order from recent to early of the collection times, the key information of the preset number of collected information resources is displayed in the designated region in a form of information items. Referring to Fig. 6, one item of key information of a collected information resource occupies one information item. The key information of the most recently collected information resources among the preset number of collected information resources is displayed at the top location of the designated region, and the key information of the earliest collected information resources is displayed at the bottom location of the designated region.

For example, referring to Fig. 6, the preset number is 3, that is, key information of 3 items of collected information resources is displayed in the designated region. In another embodiment, the key information of the selected preset number of collected information resources are displayed in an order from recent to early of the collection times. Referring to Fig. 3, based on the collection times, "###experiencing the server, after this update, the five heroes are going to be unbelievable" displayed at the top location of the designated region is later than "How I spend a day with ##", while "How I spend a day with ##" is later than "<In the name of people> actor acting vote" displayed at the bottom location of the designated region.

The first point that needs to be noted is that if at this time, collection of one item of information resource is completed, the key information of the information resource that has just been collected will be displayed at the top of the designated region replacing "###experiencing the server, after this update, the five heroes are going to be unbelievable" in Fig. 6. Correspondingly, "<In the name of people> actor acting vote" will disappear from the designated region.

The second point that needs to be noted is that since the number of characters included in each piece of title information may be different, when the number of characters included in one piece of title information exceeds a certain threshold, only part of the content of the title information may be displayed on the corresponding information item.

The third point that needs to be noted is that for an information resource in a non-webpage form, the information resource may contain no picture. Or, some information resources in webpage forms may also contain no picture. In such cases, the operating system may assign a picture in default for the corresponding information resource.

In another embodiment, in addition to the preset number of collected information resources, other collected information resources in the common collection folder may be displayed in the following manner.

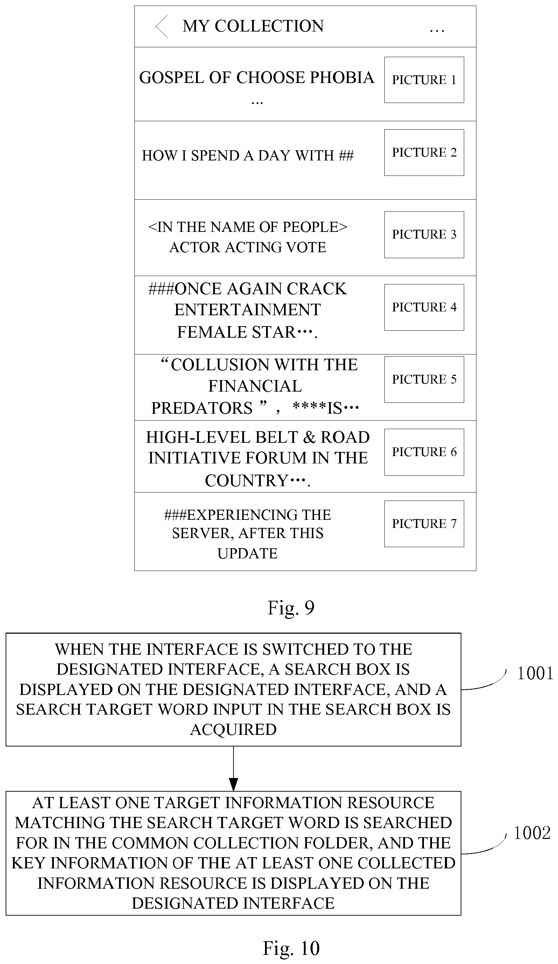

For example, a details display button is displayed in the designated region for displaying the common collection folder. Referring to Fig. 6, the "collecting all" button located at the tail of the designated region is a specific form of such details display button. When the operating system detects a selection operation by the user on the details display button, the key information of the multiple information resources gathered and stored in the common collection folder is displayed similarly in an order from recent to early of the collection times. As shown in Fig. 9, similarly, the key information of the most recently collected information resources among the multiple collected information resources is displayed at the top location of the designated region, and the key information of the earliest collected information resources is displayed at the bottom location of the designated region.

In addition, if the number of the information resources gathered and stored in the common collection folder is large, when a new page is opened for displaying the stored information resources, subject to the limitation of the size of the terminal screen, only key information of part of the information resources may be displayed. In this case, an embodiment of the present invention also supports that when the operating system detects a sliding operation on the new page, the operating system displays the key information of other information resources than the multiple collected information resources in the common collection folder in a rolling manner according to an order from recent to early of the collection times, so that users may view all of the collected information resources.

In another embodiment, when the operating system detects a confirmation operation by the user on the details display button, in addition to directly displaying the information resources gathered and stored in an order from recent to early of the collection times, an embodiment of the present invention also supports displaying the gathered and stored information resources according to the types. The detailed process is as follows.

According to the types of the information resources, key information of the multiple collected information resources in the common collection folder is displayed. Among the multiple information resources, the information resources belonging to the same type are displayed at locations adjacent to each other. Among the information resources belonging to the same type, the key information of the earlier information resource is displayed at the earlier location.

In other words, although the collected information resources are divided into types, the at least one item of information resource belonging to the same type, when being displayed, are displayed in an order from recent to early of the collection times.

The information resources in webpage forms are divided into type based on the domain names. That is, address link information corresponding to each of the collected information resources is obtained, and a domain name information in the address link information corresponding to the collected information resource is extracted. At least two collected information resources having consistent domain name information are determined as belonging to the same type of information resources. For example, an information resource from a video type application may generally have a domain name in the corresponding address link information containing a name of a video website. For two items of information resources, as long as the name of the video website appears in both of the corresponding two pieces of address link information, the two items of information resources may be categorized into the same type.

Information resources in non-webpage forms may be categorized into one type. Alternatively, the extracted key content word is recognized and the information resources in this type may be further divided based on the recognition result, which will not be particularly limited in the embodiment of the present invention.

In another embodiment, it is also supported to delete the collected information resources.

Still taking the above multiple collected information resources as an example, one delete button may be displayed respectively on each of the information items of key information of the multiple collected information resources. When the operating system detects a confirmation operation on a delete button corresponding to any of the collected information resources, the collected information resource as selected is deleted from the common collection folder.

In another embodiment, for currently displayed information resources, no matter displayed in the designated region, or displayed in a new page by selecting the details display button, an embodiment of the present invention also supports the user viewing the detailed contents apart from the key information of the information resources. The detailed contents of the designated information resource as selected may displayed through a network view component of the system, or may be displayed through corresponding application. The specific display mode may be set up by the user. For example, when a selection operation on a designated information resource is detected, a pop-up window is displayed for the user to select the display mode. The network view component of the system may refer to a webview component.

Acquiring specific content of a designated information resource may be implemented in the following manner. When a selection operation on any one item of currently displayed key information is detected, if the selected designated information resource is webpage content, the designated information resource is acquired from a second server according to the address link information corresponding to the designated information resource. Or, if the selected designated information resource is non-webpage content, the designated information resource is acquired from the local machine according to the key content word contained in the selected key information.

When the designated information resource is displayed through the application, the specific content of the designated information resource is actually acquired through the application. For example, after the application is started, the application loads the relevant page from the second server. That is, when a selection operation on any one item of currently displayed key information is detected, if the selected designated information resource is webpage content, it is determined which application the designated information resource is derived from according to the address link information corresponding to the designated information resource. Then, the determined application is started, and the designated information resource is displayed through the determined application.

Here, the process of starting the determined application and displaying the designated information resource through the determined application includes the step of acquiring the specific content of the designated information resource from the second server through the determined application.

Determining which application the designated information resource is derived from according to the address link information corresponding to the designated information resource may be implemented in the following manner. It is determined which application the designated information resource is derived from according to the domain name in the address link information corresponding to the designated information resource. In other words, in an embodiment of the present invention, a list of corresponding relationship between the domain names and the applications is previously stored in the local machine. According to the above domain name in the address link information corresponding to the designated information resource, the list of corresponding relationship between the domain names and the applications is search for a match, to determine which application the designated information resource is derived from.

It should be noted that the list of corresponding relationship between the domain names and the applications may be updated. That is, in an embodiment of the present invention, the operating system may receive from the first server an updating instruction with respect to the list, and update the list according to the updating instruction. That is, the above list is maintained manually, and the first server may periodically send an updating instruction to the terminal, or when there is an update, the first server may send an updating instruction to the terminal in real time, such that the terminal updates the list timely according to the updating instruction.

In another embodiment, if the above designated information resource or any item of the information resources which has specific content to be presented is graphic and text content, such as a webpage of an article, for example for the designated information resource, before the designated information resource is displayed, the designated information resource may be processed by adjusting the layout, to obtain a processed information resource. Then, the processed information resource is displayed.

The purpose of the process of adjusting the layout lies in that: on one hand, multiple information resources in webpage display forms may have a unified presentation form; and on the other hand, advertising information which is not associated with the specific content of the original webpage may also be filtered out.

In another embodiment, if the above processed information resource is displayed through the network view component, a presentation experience setting option may also be displayed on the page for displaying the processed designated information resource. The presentation experience setting option includes at least a background color adjustment option and a font size adjustment option. The background color adjustment option includes at least two background color pull-down sub-options. The font size adjustment option includes at least two font size pull-down sub-options. Thus, it may realize adjustment of the background color and the font size.

In another embodiment, some information resources may be dynamically updated, so that for each item of the information resources gathered in the common collection folder, the operating system may periodically detect whether each item of the information resources has dynamically update. If one item of information resource has dynamically update, the key information of the item of information resource and an update notification message of the item of information resource may be displayed at a top position of the designated region where the common collection folder is located, so as to inform the user in real time. The types of the information resource having dynamic update include but not limited to the following.

Goods price trend and price reduction reminder. For a collected information resource of introduction information on goods, the price change of the goods may be track for a long time. Moreover, it may be set up that when the price is reduced or is reduced to a certain degree, the user is reminded in a form of notification or the like.

Video episode update reminder. For a collected information resource of video, update of the episodes may be acquired from the video server side, to provide a video tracking capability. When there is a new episode updated, the user may be reminded in a form of notification or the like.

E-book update reminder. For a collected information resource of an e-book, the update of the book may be acquired from the e-book server side, to provide a book update tracking capability. When there is a new chapter updated, the user may be reminded in a form of notification or the like.

Person relation content update. For a collected information resource of introduction of a person / a group of persons, or encyclopedia content, update of the current state of the person whose information is collected and relative news may be recommended to the user.

Shop recent dynamics reminder. For a collected information resource of introduction of a shop, when the shop has recent dynamics such as new promotional activities (new group purchase, price reduction, etc.) or change of the state of the shop or relevant news, the user may be reminded in a form of notification or the like.

It should be noted that nowadays, for each of the applications, there is a message push function to remind the user in real time of relative dynamic update. Therefore, the operating system may acquire the pushed messages of the applications, to capture dynamic update of the above types of information resources. However, acquisition of the dynamic update may be implemented in other manners, which will not be particularly limited in the embodiment of the present invention.

In the method for displaying an information resource provided by the embodiment of the present invention, since displaying the information resources gathered and stored in the common collection folder on the designated interface in forms of cards is realized, a certain item of information resource may be viewed conveniently and quickly, without performing complex operation of multiple steps. Thus, it may provide a quick and highly efficient entrance for subsequent viewing process, which is more intelligent.

Since the common collection folder gathers and stores key information of information resources derived from multiple applications while the user may want to view one certain item of information resource among these information resources, in order to facilitate the user to quickly find the target information resource from the huge number of information resources stored in the common collection folder, an embodiment of the present invention also provides a method for searching for an information resource as follows.

In a fourth aspect, an embodiment of the present invention proposes a method for searching for an information resource.

Fig. 10 is a flow chart illustrating a method for searching for an information resource. The method includes the following steps.

In step 1001, when the interface is switched to the designated interface, a search box is displayed on the designated interface, and a search target word input in the search box is acquired.

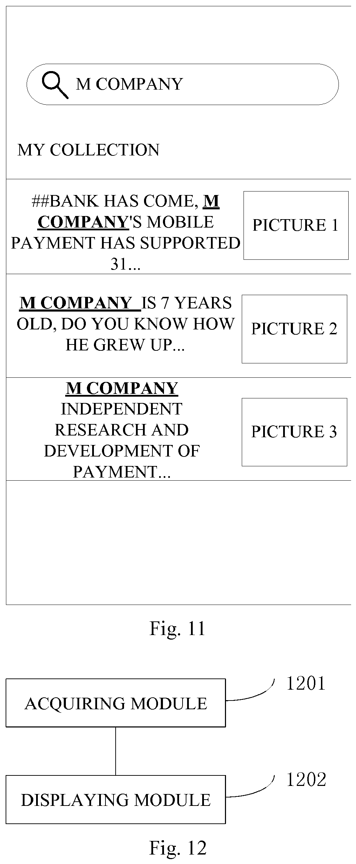

In this step, when the designated interface is switched to from any interface, as shown in Fig. 11, a search box may be displayed on the designated interface. Generally, when the operating system detects a selection operation by the user on the search box, a cursor may be displayed in the search box, and an input interface may be invoked for the user to input. Afterwards, the operating system may acquire the content input by the user in the search box, and take the input content as the search target word.

In step 1002, at least one target information resource matching the search target word is searched for in the common collection folder, and the key information of the at least one collected information resource may be displayed on the designated interface.

As described above, the information resource is divided into webpage content and non-webpage content. In an embodiment of the present invention, during the process of searching for the target information resource, an information resource in a webpage form is searched for in the title information included in the key information, and an information resource in a non-webpage form is searched for in the key content word included in the key information. That is, searching for at least one target information resource matching the search target word may be implemented in the following manner.

At least one item of title information is acquired from all of the items of key information stored in the common collection folder. For each item of title information of the at least one item of title information, if one item of title information includes the search target word, the collected information resource corresponding to the title information is determined as the target information resource.

Or, at least one key content word is acquired from all the key information stored in the common collection folder. For each key content word of the at least one key content word, if one key content word includes the search target word, the collected information resource corresponding to the key content word is determined as the target information resource.

In another embodiment, since the information resource in the form of a non-webpage is stored in the local machine, the search target word may be searched for in the whole text range of the information resources stored in the local machine according to the search target word.

In an embodiment of the present invention, after the at least one target information resource matching the search target word is searched out, the key information of the at least one target information resource may be displayed on the designated interface according to the manner described above, which will not be repeated herein. When a selection operation by the user on any item of target information resource is detected, as described above, the selected target information resource is displayed through the webview component or the determined application. The selected target information resource is derived from the determined application.

In another embodiment, after at least one target information resource is searched out, the at least one target information resource may be displayed in the designated region. If the number of the at least one target information resource is less than the maximum number of information resources that may be displayed, all of the target information resources may be simultaneously displayed in the designated region. If the number of the at least one target information resource is larger than the maximum number of information resources that may be displayed simultaneously, a preset number of information resources most recently collected are selected, and the preset number corresponds to the maximum number of information resources. Afterwards, the key information of the preset number of information resources is displayed in the designated region according to an order from recent to early of the collection times.

In another embodiment, for any target information resource displayed in the designated region, if the key information of the target information resource includes the content key word, as shown in Fig. 11, the search target word in the content key word may be displayed as distinguished from other word in the content key word. Alternatively, if the key information of the target information resource includes the title information, the search target word in the title information may be displayed as distinguished from other word in the title information.

In other words, for an information resource, if the key information in a text form displayed in the interface as shown in Fig. 11 includes the search target word, the corresponding content may be displayed as distinguished from other content.

In another embodiment, the search range of the search box may be further expanded, rather than being limited to the common collection folder, and may be all the other content stored in the terminal than the common collection folder, and the other content associated with the search target word may be displayed. The determination of the search range may be implemented by the user setting up corresponding searching mechanism. In addition, for the search function of the information resource, the operating system may also provide a function enabling button, and the user may manually select to enable or disable the search function through the function enabling button, which will not be limited in the embodiment of the present invention.

In the method for searching for an information resource provided by the embodiment of the present invention, based on the search target word input by the user, the target information resource may be automatically searched from the multiple information resource gathered and collected in the common collection folder. It may avoid the problem that in the related art, the user forgets in which application's collection folder the target information resource is collected, and has to traverse the applications to search. The method for searching for an information resource is more convenient and more intelligent.

Fig. 12 is a block diagram illustrating a device for displaying an information resource according to an exemplary embodiment. Referring to Fig. 12, the device includes an acquiring module 1201 and a displaying module 1202.

The acquiring module 1201 is configured to, when switching to a designated interface, acquire key information of a preset number of items of collected information resources stored in a common collection folder, the common collection folder gathering and storing key information of user collected information resources derived from at least one application.

The displaying module 1202 is configured to display the key information of the preset number of items of collected information resources on the designated interface.

In another embodiment, the displaying module 1202 is configured to: determine a designated region on the designated interface for displaying the common collection folder; and according to an order from recent to early of collection times, display the key information of the preset number of items of collected information resources in the designated region in a form of information items.

Herein the collection times of the preset number of items of collected information resources are later than other collected information resources among all the collected information resources, the information resource collected most recently among the preset number of items of collected information resources is displayed at the top position of the designated region, and the information resources collected earliest are displayed at the bottom position of the designated region.

In another embodiment, the acquiring module 1201 is configured to: based on a size of the designated region occupied for displaying the common collection folder on the designated interface, determine a number of items of information resources that can be displayed in the designated region; and according to an order from recent to early of the collection times, select from the common collection folder the preset number of most recently collected information resources, the preset number corresponding to the number of items of information resources.

In another embodiment, the displaying module 1202 is further configured to display a details display button in the designated region for displaying the common collection folder.

The displaying module 1202 is further configured to, when detecting a confirmation operation on the details display button, display the key information of the items of information resources stored in the common collection folder in a form of information items according to an order from recent to early of the collection times.

Herein the key information of the information resource collected most recently among the items of collected information resources is displayed at the top position of a page, and the key information of the information resources collected earliest is displayed at the bottom position of the page.

In another embodiment, the displaying module 1202 is further configured to, when detecting a sliding operation, display key information of other information resources than the items of collected information resources in the common collection folder in a rolling manner according to an order from recent to early of collection times.

In another embodiment, the displaying module 1202 is further configured to: display a details display button in the designated region for displaying the common collection folder; and when detecting a confirmation operation on the details display button, display the key information of the items of collected information resources in the common collection folder according to types of the information resources.

Herein among the items of information resources, the information resources belonging to the same type are displayed at locations adjacent to each other; and among the information resources belonging to the same type, the key information of information resource collected earlier is displayed at earlier location.

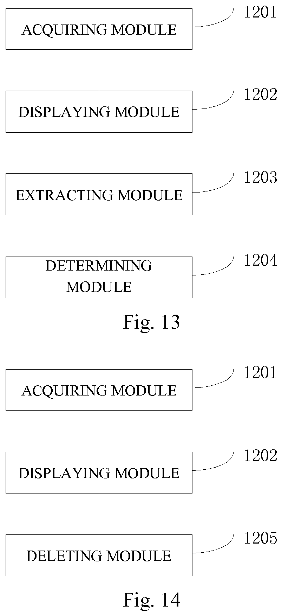

In another embodiment, referring to Fig. 13, the device further includes:
the acquiring module 1201 further configured to, for each of the collected information resources in the common collection folder, acquire address link information corresponding to the collected information resource;
an extracting module 1203 configured to extract a domain name information in the address link information corresponding to the collected information resource; and
a determining module 1204 configured to determine at least two collected information resources having consistent domain name information as belonging to the same type of information resources.

In another embodiment, referring to Fig. 14, the device further includes:
the displaying module 1202 configured to display one delete button respectively on each of the information items where the key information of the items of collected information resources is located; and
a deleting module 1205 configured to, when detecting a confirmation operation on a delete button corresponding to any of the collected information resources, delete the collected information resource as selected from the common collection folder.

In another embodiment, the acquiring module 1201 is further configured to: upon detecting a selection operation on any one item of key information of the preset number of items of key information, when the selected designated information resource is webpage content, acquire the designated information resource from a server according to the address link information corresponding to the designated information resource; or, upon detecting a selection operation on any one item of key information of the preset number of items of key information, when the selected designated information resource is non-webpage content, acquire the designated information resource from the local machine according to a key content word contained in the key information.

In another embodiment, the displaying module 1202 is further configured to display the designated information resource through a network view component of the system.

In another embodiment, the determining module 1204 is configured to, upon detecting a selection operation on any one item of key information of the preset number of items of key information, when the selected designated information resource is webpage content, determine which application the designated information resource is derived from according to the address link information corresponding to the designated information resource; and
the displaying module 1202 is further configured to start the determined application, and display the designated information resource through the determined application.

In another embodiment, the determining module 1204 is further configured to determine which application the designated information resource is derived from according to the domain name in the address link information corresponding to the designated information resource.

Herein a list of corresponding relationship between the domain names and the applications is previously stored in the local machine.

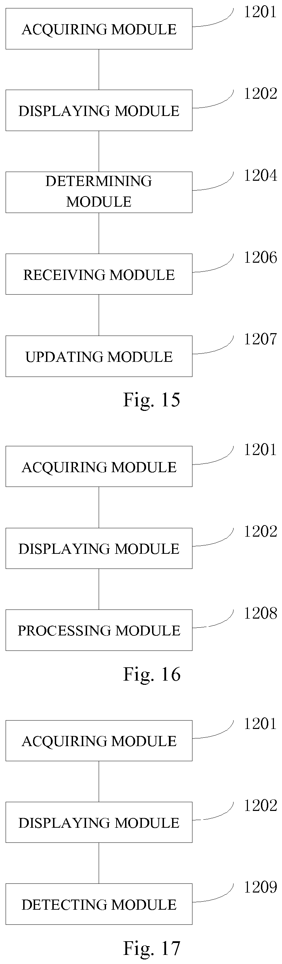

In another embodiment, referring to Fig. 15, the device further includes:
a receiving module 1206 configured to receive from the server an updating instruction with respect to the list, and
an updating module 1207 configured to update the list according to the updating instruction.

In another embodiment, referring to Fig. 16, the device further includes:
a processing module 1208 configured to, before displaying the designated information resource, when the designated information resource is graphic and text content, process the designated information resource by adjusting the layout, to obtain a processed designated information resource.

In another embodiment, the displaying module 1202 is further configured to, when the processed designated information resource is displayed through the network view component, display a presentation experience setting option on the page for displaying the processed designated information resource.

Herein the presentation experience setting option includes at least a background color adjustment option and a font size adjustment option, the background color adjustment option includes at least two background color pull-down sub-options, and the font size adjustment option includes at least two font size pull-down sub-options.

In another embodiment, referring to Fig. 17,the device further includes:
a detecting module 1209 configured to, for each collected information resource of all the collected information resources, periodically detect whether the information resource has dynamically update; and
the displaying module 1202 further configured to, when the information resource has dynamically update, display the key information of the collected information resource and an update notification message of the collected information resource at a top position of the designated region where the common collection folder is located.

In the device provided by the embodiments of the present invention, since displaying the information resources gathered and stored in the common collection folder on the designated interface in form of cards is realized, a certain item of information resource may be viewed conveniently and quickly, without performing complex operation of multiple steps. Thus, it may provide a quick and highly efficient entrance for subsequent viewing process, which is more intelligent.

With respect to the devices in the above embodiments, the specific manners for performing operations for individual modules therein have been described in detail in the embodiments regarding the relevant methods, which will not be elaborated herein.

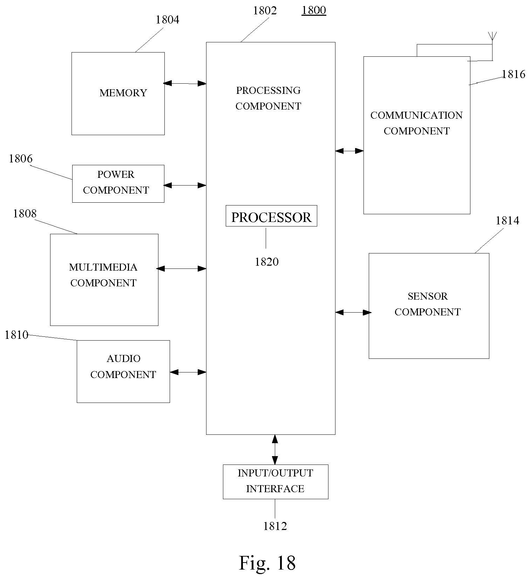

Fig. 18 is a block diagram illustrating a device 1800 for displaying an information resource according to an exemplary embodiment. For example, the device 1800 may be a mobile phone, a computer, a digital broadcast terminal, a messaging device, a gaming console, a tablet, a medical device, exercise equipment, a personal digital assistant, and the like.

Referring to Fig. 18, the device 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the device 1800, such as the operations associated with display, telephone calls, data communications, camera operations, and recording operations. The processing component 1802 may include one or more processors 1820 to execute instructions to perform all or part of the steps in the above described methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the device 1800. Examples of such data include instructions for any applications or methods operated on the device 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the device 1800. The power component 1806 may include a power management system, one or more power sources, and any other components associated with the generation, management, and distribution of power in the device 1800.

The multimedia component 1808 includes a screen providing an output interface between the device 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and/or the rear camera may receive an external multimedia datum while the device 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the device 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the device 1800. For instance, the sensor component 1814 may detect an open/closed status of the device 1800, relative positioning of components, e.g., the display and the keypad, of the device 1800, a change in position of the device 1800 or a component of the device 1800, a presence or absence of user contact with the device 1800, an orientation or an acceleration/deceleration of the device 1800, and a change in temperature of the device 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the device 1800 and other devices. The device 1800 can access a wireless network based on a communication standard, such as WiFi, 2G, or 3G, or a combination thereof. In one exemplary embodiment, the communication component 1816 receives a broadcast signal or broadcast associated information from an external broadcast management system via a broadcast channel. In one exemplary embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1804, executable by the processor 1820 in the device 1800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, enables the terminal to perform the above method for displaying an information resource.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other embodiments of the invention will be apparent to those skilled in the art from consideration of the specification and practice of the invention disclosed here. This application is intended to cover any variations, uses, or adaptations that fall within the scope of the appended claims. It is intended that the specification and examples be considered as exemplary only, with a true scope of the invention being indicated by the following claims

It will be appreciated that the present invention is not limited to the exact construction that has been described above and illustrated in the accompanying drawings, and that various modifications and changes may be made without departing from the scope thereof. It is intended that the scope of the invention only be limited by the appended claims.

## Claims

1. A method for displaying an information resource, comprising:
monitoring (201), by an operating system of a terminal, a collection event generated on a displayed page of an application;
capturing, by the operating system, the collection event which occurred on the displayed page;
determining, by the operating system, a type of an information resource to be collected;
then, according to the type of the information resource to be collected, acquiring, by the operating system, key information of the information resource to be collected;
storing (202), by the operating system, in a common collection folder, the key information of the information resources to be collected;
when switching to a designated interface, acquiring (801) a first set of key information of a preset number of items of collected information resources stored in the common collection folder, the common collection folder gathering and storing key information of user collected information resources derived from at least one application; and
displaying (802) the first set of the key information on the designated interface.

2. The method according to claim 1, further comprising:
displaying a details display button in a designated region on the designated interface for displaying the common collection folder; and
when detecting a confirmation operation on the details display button, displaying the first set of the key information in the common collection folder according to types of the information resources;
wherein among the items of the first set of the key information, information resources belonging to a same type are displayed at locations adjacent to each other, and wherein among the information resources belonging to the same type, key information of an information resource collected earlier is displayed at a location associated with earlier-collected information resources.

3. The method according to claim 2, further comprising:
for each of the collected information resources in the common collection folder, acquiring address link information corresponding to the collected information resource;
extracting a domain name information from the address link information corresponding to the collected information resource; and
determining at least two collected information resources having consistent domain name information as belonging to the information resources belonging to the same type of information resources.

4. The method according to claim 1, further comprising:
upon detecting a selection operation on an item of key information of the preset number of items of the first set of the key information, when the selected item is associated with an information resource that is webpage content, determining which application of the one or more applications the information resource is derived from according to address link information corresponding to the information resource;
launching the application; and
displaying the information resource via the application.

5. The method according to claim 1, further comprising:
previously collecting and analyzing various types of displayed pages; and
monitoring the pages.

6. A device (1800) for displaying an information resource, the device comprising an operating system configured to:
monitor (201) a collection event generated on a displayed page of an application;
capture the collection event which occurred on the displayed page;
determine a type of an information resource to be collected;
acquire, according to the type of the information resource to be collected, key information of the information resource to be collected; and store (202), in a common collection folder of the device, key information of collected information resources derived from one or more
applications, wherein the collected information resources are collected by a user;
the device further comprising:
an acquiring module (1201) configured to, when switching to a designated interface, acquire a first set of the key information of a preset number of items of collected information resources stored in the common collection folder, the common collection folder gathering and storing key information of user collected information resources derived from at least one application; and
a displaying module (1202) configured to display the first set of the key information on the designated interface.

7. The device according to claim 6, wherein the displaying module is further configured to:
display a details display button in a designated region on the designated interface for displaying the common collection folder; and
when detecting a confirmation operation on the details display button, display the first set of the key information in the common collection folder according to types of the information resources;
wherein among the items of the first set of the key information resources, the information resources belonging to a same type are displayed at locations adjacent to each other, and wherein among the information resources belonging to the same type, key information of an information resource collected earlier is displayed at a location associated with earlier-collected information resources.

8. The device according to claim 7, further comprising:
the acquiring module further configured to, for each of the collected information resources in the common collection folder, acquire address link information corresponding to the collected information resource;
an extracting module configured to extract a domain name information from the address link information corresponding to the collected information resource; and
a determining module configured to determine at least two collected information resources having consistent domain name information as belonging to the information resources belonging to the same type of information resources.

9. The device according to claim 6, wherein the acquiring module is further configured to:
upon detecting a selection operation on an item of key information of the preset number of items of the first set of the key information, when the selected item is associated with an information resource that is webpage content, acquire the information resource from a server according to address link information corresponding to the information resource; or,
upon detecting a selection operation on an item of key information of the preset number of items of the first set of the key information, when the selected item is associated with an information resource that is non-webpage content, acquire the information resource from the local machine according to a key content word contained in the key information.

10. The device according to claim 6, further comprising:
a determining module (1204) configured to, upon detecting a selection operation on an item of key information of the preset number of items of the first set of the key information, when the selected item is associated with an information resource that is webpage content, determine which application of one or more applications the information resource is derived from according to address link information corresponding to the information resource; and
the displaying module further configured to launch the application, and display the information resource via the application.

11. The device according to claim 10, wherein the determining module is further configured to determine which application of the one or more applications the information resource is derived from according to a domain name in the address link information corresponding to the information resource;
wherein a list of corresponding relationship between domain names and applications is previously stored in the local machine.

12. The device according to claim 11, further comprising:
a receiving module configured to receive from a server an updating instruction with respect to the list, and
an updating module configured to update the list according to the updating instruction.

13. The device according to any one of claims 6-8, further comprising:
a detecting module configured to, for each collected information resource of the collected information resources, periodically determine whether the collected information resource has been dynamically updated; and
the displaying module further configured to, when the collected information resource has been dynamically updated, display key information of the collected information resource and an update notification message of the collected information resource at a top position of a designated region where the common collection folder is located.

14. A computer program product, comprising computer-readable program instructions, which, when executed by a computer, cause the computer to perform a method for displaying an information resource according to any one of claims 1 to 5.

15. A computer readable storage medium having stored therein the computer program product of claim 14.

## Patentansprüche

1. Verfahren zum Anzeigen einer Informationsressource, das umfasst:
Überwachen (201), durch ein Betriebssystem eines Endgeräts, eines Sammelereignisses, das auf einer angezeigten Seite einer Anwendung erzeugt wird;
Aufzeichnen, durch das Betriebssystem, des Sammelereignisses, das auf der angezeigten Seite aufgetreten ist;
Bestimmen, durch das Betriebssystem, eines Typs einer Informationsressource, die gesammelt werden soll;
dann, gemäß dem Typ der Informationsressource, die gesammelt werden soll, Erheben, durch das Betriebssystem, von Schlüsselinformationen der Informationsressource, die gesammelt werden soll:
Speichern (202), durch das Betriebssystem, in einem gemeinsamen Sammelordner, der Schlüsselinformationen der Informationsressourcen, die gesammelt werden sollen;
beim Umschalten zu einer festgelegten Schnittstelle, Erheben (801) eines ersten Satzes von Schlüsselinformationen einer voreingestellten Anzahl von Elementen gesammelter Informationsressourcen, die in dem gemeinsamen Sammelordner gespeichert sind, wobei der gemeinsame Sammelordner Schlüsselinformationen von vom Benutzer gesammelten Informationsressourcen, die von mindestens einer Anwendung abgeleitet werden, vereint und speichert; und
Anzeigen (802) des ersten Satzes von Schlüsselinformationen auf der festgelegten Schnittstelle.

2. Verfahren nach Anspruch 1, das weiter umfasst:
Anzeigen einer Detailanzeigetaste in einem festgelegten Bereich auf der festgelegten Schnittstelle zum Anzeigen des gemeinsamen Sammelordners; und
wenn ein Bestätigungsvorgang auf der Detailanzeigetaste erfasst wird, Anzeigen des ersten Satzes von Schlüsselinformationen in dem gemeinsamen Sammelordner gemäß Typen der Informationsressourcen;
wobei unter den Elementen des ersten Satzes von Schlüsselinformationen Informationsressourcen, die zu demselben Typ gehören, an Stellen, die aneinandergrenzen, angezeigt werden, und wobei unter den Informationsressourcen, die zu demselben Typ gehören, Schlüsselinformationen einer Informationsressource, die zuvor gesammelt wurde, an einer Stelle, die mit den zuvor gesammelten Informationsressourcen assoziiert ist, angezeigt werden.

3. Verfahren nach Anspruch 2, das weiter umfasst:
für jede der gesammelten Informationsressourcen in dem gemeinsamen Sammelordner Erheben von Adresslinkinformationen, die der gesammelten Informationsressource entsprechen;
Extrahieren einer Domänennameninformation aus den Adresslinkinformationen, die der gesammelten Informationsressource entsprechen; und
Bestimmen mindestens zweier gesammelter Informationsressourcen, die konsistente Domänennameninformation aufweisen, als zu den Informationsressourcen gehörend, die zu demselben Typ von Informationsressourcen gehören.

4. Verfahren nach Anspruch 1, das weiter umfasst:
beim Erfassen eines Auswahlvorgangs auf einem Element von Schlüsselinformationen der voreingestellten Anzahl von Elementen des ersten Satzes von Schlüsselinformationen, wenn das ausgewählte Element mit einer Informationsressource assoziiert ist, die Webseiteninhalt ist, gemäß Adresslinkinformationen, die der Informationsressource entsprechen, Bestimmen, von welcher Anwendung der einen oder mehreren Anwendungen die Informationsressource abgeleitet wird;
Starten der Anwendung; und
Anzeigen der Informationsressource über die Anwendung.

5. Verfahren nach Anspruch 1, das weiter umfasst:
Vorabsammeln und Analysieren diverser Typen angezeigter Seiten; und Überwachen der Seiten.

6. Vorrichtung (1800) zum Anzeigen einer Informationsressource, wobei die Vorrichtung ein Betriebssystem umfasst, das konfiguriert ist, um:
ein Sammelereignis, das auf einer angezeigten Seite einer Anwendung erzeugt wird, zu überwachen (201);
das Sammelereignis, das auf der angezeigten Seite aufgetreten ist, aufzunehmen;
einen Typ einer Informationsressource, die gesammelt werden soll, zu bestimmen;
gemäß dem Typ der Informationsressource, die gesammelt werden soll, Schlüsselinformationen der Informationsressource, die gesammelt werden soll, zu erheben; und
in einem gemeinsamen Sammelordner der Vorrichtung Schlüsselinformationen der gesammelten Informationsressourcen, die von einer oder mehreren Anwendungen abgeleitet werden, zu speichern (202), wobei die gesammelten Informationsressourcen von einem Benutzer gesammelt werden;
wobei die Vorrichtung weiter umfasst:
ein Erhebungsmodul (1201), das dazu konfiguriert ist, beim Umschalten zu einer festgelegten Schnittstelle einen ersten Satz von Schlüsselinformationen einer voreingestellten Anzahl von Elementen gesammelter Informationsressourcen, die in dem gemeinsamen Sammelordner gespeichert sind, zu erheben, wobei der gemeinsame Sammelordner Schlüsselinformationen von vom Benutzer gesammelten Informationsressourcen, die von mindestens einer Anwendung abgeleitet werden, vereint und speichert; und
ein Anzeigemodul (1202), das konfiguriert ist, um den ersten Satz der Schlüsselinformationen auf der festgelegten Schnittstelle anzuzeigen.

7. Vorrichtung nach Anspruch 6, wobei das Anzeigemodul weiter konfiguriert ist, um:
eine Detailanzeigetaste in einem festgelegten Bereich auf der festgelegten Schnittstelle zum Anzeigen des gemeinsamen Sammelordners anzuzeigen; und
beim Erfassen eines Bestätigungsvorgangs auf der Detailanzeigetaste, den ersten Satz von Schlüsselinformationen in dem gemeinsamen Sammelordner gemäß Typen der Informationsressourcen anzuzeigen;
wobei unter den Elementen des ersten Satzes der Schlüsselinformationsressourcen die Informationsressourcen, die zu demselben Typ gehören, an Stellen, die aneinandergrenzen, angezeigt sind, und wobei unter den Informationsressourcen, die zu demselben Typ gehören, Schlüsselinformationen einer Informationsressource, die zuvor gesammelt wurden, an einer Stelle, die mit den zuvor gesammelten Informationsressourcen assoziiert ist, angezeigt sind.

8. Vorrichtung nach Anspruch 7, die weiter umfasst:
das Erhebungsmodul, das weiter konfiguriert ist, um für jede der gesammelten Informationsressourcen in dem gemeinsamen Sammelordner Adresslinkinformationen, die der gesammelten Informationsressource entsprechen, zu erheben;
ein Extraktionsmodul, das konfiguriert ist, um eine Domänennameninformation aus den Adresslinkinformationen, die der gesammelten Informationsressource entsprechen, zu extrahieren; und
ein Bestimmungsmodul, das konfiguriert ist, um mindestens zwei gesammelte Informationsressourcen, die konsistente Domänennameninformation aufweisen, als zu den Informationsressourcen gehörend, die zu demselben Typ von Informationsressourcen gehören, zu bestimmen.

9. Vorrichtung nach Anspruch 6, wobei das Erhebungsmodul weiter konfiguriert ist, um:
beim Erfassen eines Auswahlvorgangs auf einem Element von Schlüsselinformationen der voreingestellten Anzahl von Elementen des ersten Satzes von Schlüsselinformationen, wenn das ausgewählte Element mit einer Informationsressource assoziiert ist, die Webseiteninhalt ist, die Informationsressource von einem Server gemäß Adresslinkinformationen, die der Informationsressource entsprechen, zu erheben; oder
beim Erfassen eines Auswahlvorgangs auf einem Element von Schlüsselinformationen der voreingestellten Anzahl von Elementen des ersten Satzes von Schlüsselinformationen, wenn das ausgewählte Element mit einer Informationsressource assoziiert ist, die kein Webseiteninhalt ist, die Informationsressource von der lokalen Maschine gemäß einem Schlüsselinhaltswort, das in den Schlüsselinformationen enthalten ist, zu erheben.

10. Vorrichtung nach Anspruch 6, die weiter umfasst:
ein Bestimmungsmodul (1204), das konfiguriert ist, um beim Erfassen eines Auswahlvorgangs auf einem Element von Schlüsselinformationen der voreingestellten Anzahl von Elementen des ersten Satzes von Schlüsselinformationen, wenn das ausgewählte Element mit einer Informationsressource assoziiert ist, die Webseiteninhalt ist, gemäß Adresslinkinformationen, die der Informationsressource entsprechen zu bestimmen, von welcher Anwendung der einen oder mehreren Anwendungen die Informationsressource abgeleitet wird; und
das Anzeigemodul weiter konfiguriert ist, um die Anwendung zu starten und die Informationsressource über die Anwendung anzuzeigen.

11. Vorrichtung nach Anspruch 10, wobei das Bestimmungsmodul weiter konfiguriert ist, um gemäß einem Domänennamen in den Adresslinkinformationen, der der Informationsressource entspricht, zu bestimmen, von welcher Anwendung der einen oder mehreren Anwendungen die Informationsressource abgeleitet ist;
wobei eine Liste entsprechender Beziehung zwischen Domänennamen und Anwendungen zuvor in der lokalen Maschine gespeichert wird.

12. Vorrichtung nach Anspruch 11, die weiter umfasst:
ein Empfangsmodul, das konfiguriert ist, um von einem Server eine Aktualisierungsanweisung im Zusammenhang mit der Liste zu empfangen, und
ein Aktualisierungsmodul, das konfiguriert ist, um die Liste gemäß der Aktualisierungsanweisung zu aktualisieren.

13. Vorrichtung nach einem der Ansprüche 6 bis 8, die weiter umfasst:
ein Erfassungsmodul, das konfiguriert ist, um für jede gesammelte Informationsressource der gesammelten Informationsressourcen periodisch zu bestimmen, ob die gesammelte Informationsressource dynamisch aktualisiert wurde; und
das Anzeigemodul weiter konfiguriert ist, um, wenn die gesammelte Informationsressource dynamisch aktualisiert wurde, Schlüsselinformationen der gesammelten Informationsressource und eine Aktualisierungsbekanntgabemeldung der gesammelten Informationsressource an einer Oberseitenposition eines festgelegten Bereichs, in dem sich der gemeinsame Sammelordner befindet, anzuzeigen.

14. Computerprogrammprodukt, das computerlesbare Programmanweisungen umfasst, die, wenn sie von einem Computer ausgeführt werden, den Computer veranlassen, ein Verfahren zum Anzeigen einer Informationsressource nach einem der Ansprüche 1 bis 5 auszuführen.

15. Computerlesbares Speichermedium, in dem das Computerprogrammprodukt des Anspruchs 14 gespeichert ist.

## Revendications

1. Procédé d'affichage d'une ressource d'informations, comprenant les étapes consistant à :
surveiller (201), par un système d'exploitation d'un terminal, un événement de collecte généré sur une page affichée d'une application ;
capturer, par le système d'exploitation, l'événement de collecte qui s'est produit sur la page affichée ;
déterminer, par le système d'exploitation, un type d'une ressource d'information à collecter ;
puis, selon le type de la ressource informationnelle à collecter, acquérir, par le système d'exploitation, des informations clés de la ressource d'informations à collecter ;
stocker (202), par le système d'exploitation, dans un dossier de collecte commun, les informations clés des ressources d'informations à collecter ;
lors de la commutation vers une interface désignée, acquérir (801) un premier ensemble d'informations clés d'un nombre prédéfini d'éléments de ressources d'informations collectées stockées dans le dossier de collecte commun, le dossier de collecte commun rassemblant et stockant des informations clés de ressources d'informations collectées par l'utilisateur dérivées d'au moins une application ; et
afficher (802) le premier ensemble d'informations clés sur l'interface désignée.

2. Procédé selon la revendication 1, comprenant en outre l'étape consistant à :
afficher un bouton d'affichage des détails dans une région désignée sur l'interface désignée pour afficher le dossier de collecte commun ; et
lors de la détection d'une opération de confirmation sur le bouton d'affichage des détails, afficher le premier ensemble d'informations clés dans le dossier de collecte commun selon des types de ressources d'information ;
dans lequel, parmi les éléments du premier ensemble d'informations clés, les ressources d'informations appartenant à un même type sont affichées à des emplacements adjacents les uns aux autres, et dans lequel, parmi les ressources d'informations appartenant au même type, les informations clés d'une ressource d'informations collectée précédemment sont affichées à un emplacement associé aux ressources d'informations collectées précédemment.

3. Procédé selon la revendication 2, comprenant en outre l'étape consistant à :
pour chacune des ressources d'informations collectées dans le dossier de collecte commun, acquérir des informations de lien d'adresse correspondant à la ressource d'informations collectée ;
extraire des informations de nom de domaine à partir des informations de lien d'adresse correspondant à la ressource d'informations collectée ; et
déterminer au moins deux ressources d'informations collectées présentant des informations de nom de domaine cohérentes comme appartenant aux ressources d'informations appartenant au même type de ressources d'informations.

4. Procédé selon la revendication 1, comprenant en outre l'étape consistant à :
lors de la détection d'une opération de sélection sur un élément d'informations clés parmi le nombre prédéfini d'éléments du premier ensemble d'informations clés, lorsque l'élément sélectionné est associé à une ressource d'informations qui est un contenu de page web, déterminer de quelle application de la ou des applications la ressource d'informations est dérivée selon les informations de lien d'adresse correspondant à la ressource d'informations ;
lancer l'application ; et
afficher la ressource d'informations via l'application.

5. Procédé selon la revendication 1, comprenant en outre l'étape consistant à :
la collecte et l'analyse préalables de divers types de pages affichées ; et
la surveillance des pages.

6. Dispositif (1800) pour afficher une ressource d'informations, le dispositif comprenant un système d'exploitation configuré pour :
surveiller (201) l'événement de collecte généré sur une page affichée d'une application ;
capturer l'événement de collecte qui s'est produit sur la page affichée ;
déterminer un type d'une ressource d'information à collecter ;
acquérir, selon le type de la ressource informationnelle à collecter, des informations clés de la ressource d'informations à collecter ; et
stocker (202), dans un dossier de collecte commun du dispositif, des informations clés de ressources d'informations collectées dérivées d'une ou plusieurs applications, dans lequel les ressources d'informations collectées sont collectées par un utilisateur ;
le dispositif comprenant en outre :
un module d'acquisition (1201) configuré pour, lors de la commutation vers une interface désignée, acquérir un premier ensemble d'informations clés d'un nombre prédéfini d'éléments de ressources d'informations collectées stockées dans le dossier de collecte commun, le dossier de collecte commun rassemblant et stockant des informations clés de ressources d'informations collectées par l'utilisateur dérivées d'au moins une application ; et
un module d'affichage (1202) configuré pour afficher le premier ensemble d'informations clés sur l'interface désignée.

7. Dispositif selon la revendication 6, dans lequel le module d'affichage est en outre configuré pour : afficher un bouton d'affichage des détails dans une région désignée sur l'interface désignée pour afficher le dossier de collecte commun ; et
lors de la détection d'une opération de confirmation sur le bouton d'affichage des détails, afficher le premier ensemble d'informations clés dans le dossier de collecte commun selon des types de ressources d'information ;
dans lequel, parmi les éléments du premier ensemble de ressources d'informations clés, les ressources d'informations appartenant à un même type sont affichées à des emplacements adjacents les uns aux autres, et dans lequel, parmi les ressources d'informations appartenant au même type, les informations clés d'une ressource d'informations collectée précédemment sont affichées à un emplacement associé aux ressources d'informations collectées précédemment.

8. Dispositif selon la revendication 7, comprenant en outre :
le module d'acquisition configuré en outre pour, pour chacune des ressources d'informations collectées dans le dossier de collecte commun, acquérir des informations de lien d'adresse correspondant à la ressource d'informations collectée ;
un module d'extraction configuré pour extraire des informations de nom de domaine à partir des informations de lien d'adresse correspondant à la ressource d'informations collectée ; et
un module de détermination configuré pour déterminer au moins deux ressources d'informations collectées présentant des informations de nom de domaine cohérentes comme appartenant aux ressources d'informations appartenant au même type de ressources d'informations.

9. Dispositif selon la revendication 6, dans lequel le module d'acquisition est en outre configuré pour :
lors de la détection d'une opération de sélection sur un élément d'informations clés parmi le nombre prédéfini d'éléments du premier ensemble d'informations clés, lorsque l'élément sélectionné est associé à une ressource d'informations qui est un contenu de page web, acquérir la ressource d'informations à partir d'un serveur selon les informations de lien d'adresse correspondant à la ressource d'informations ; ou
lors de la détection d'une opération de sélection sur un élément d'informations clés parmi le nombre prédéfini d'éléments du premier ensemble d'informations clés, lorsque l'élément sélectionné est associé à une ressource d'informations qui est un contenu de page web, acquérir la ressource d'informations à partir de la machine locale selon un mot de contenu clé contenu dans les informations clés.

10. Dispositif selon la revendication 6, comprenant en outre :
un module de détermination (1204) configuré pour, lors de la détection d'une opération de sélection sur un élément d'informations clés parmi le nombre prédéfini d'éléments du premier ensemble d'informations clés, lorsque l'élément sélectionné est associé à une ressource d'informations qui est un contenu de page web, déterminer de quelle application d'une ou des applications la ressource d'informations est dérivée selon les informations de lien d'adresse correspondant à la ressource d'informations ; et
le module d'affichage est en outre configuré pour lancer l'application et afficher la ressource d'information via l'application.

11. Dispositif selon la revendication 10, dans lequel le module de détermination est en outre configuré pour déterminer de quelle application de l'une ou des applications la ressource d'informations est dérivée selon un nom de domaine dans les informations de lien d'adresse correspondant à la ressource d'informations ;
dans lequel une liste des relations correspondantes entre les noms de domaine et les applications est préalablement stockée dans la machine locale.

12. Dispositif selon la revendication 11, comprenant en outre :
un module de réception configuré pour recevoir d'un serveur une instruction de mise à jour par rapport à la liste, et
un module de mise à jour configuré pour mettre à jour la liste selon l'instruction de mise à jour.

13. Dispositif selon l'une quelconque des revendications 6-8, comprenant en outre :
un module de détection configuré pour, pour chaque ressource d'informations collectée des ressources d'informations collectées, déterminer périodiquement si la ressource d'informations collectée a été mise à jour dynamiquement ; et
le module d'affichage est en outre configuré pour, lorsque la ressource d'informations collectées a été mise à jour dynamiquement, afficher des informations clés de la ressource d'informations collectée et un message de notification de mise à jour de la ressource d'informations collectées au niveau d'une position supérieure d'une région désignée où le dossier de collecte commun est situé.

14. Produit de programme informatique, comprenant des instructions de programme lisibles par ordinateur qui, lorsqu'elles sont exécutées par un ordinateur, amènent l'ordinateur à effectuer un procédé pour afficher une ressource d'informations selon l'une quelconque des revendications 1 à 5.

15. Support lisible par ordinateur présentant le produit de programme informatique selon la revendication 14 stocké sur celui-ci.
